# FASCICULE DE BREVET EUROPEEN

(11) **EP 0 228 972 B1**
(45) Date de publication et mention de la délivrance du brevet: **10.03.1993**
(21) Numéro de dépôt: 86402975.6
(22) Date de dépôt: 31.12.1986
(51) Int. Cl.: G01F 23/22

(54) **Dispositif et procédé de controle du niveau d'une poudre dans un recipient**
Vorrichtung und Verfahren zur Kontrolle des Füllstandes von Pulver in einem Behälter
Device and method for controlling the level of powder in a container

(30) Priorité: 02.01.1986 FR 8600021
(43) Date de publication de la demande: 15.07.1987
(73) Titulaire: COMMISSARIAT A L'ENERGIE ATOMIQUE, 75015 Paris Cédex 15 (FR)
(72) Inventeur: Baudin, Jean-Claude, F-91440 Les Ulys (FR); Couterne, Jean-Claude, F-92370 Chaville (FR); Le Potier, Dominique, F-78190 Trappes (FR)
(74) Mandataire: Mongrédien, André

(56) Documents cités:
- FR-A- 1 358 911
- GB-A- 1 487 673
- US-A- 1 650 986
- US-A- 1 833 112
- US-A- 2 279 043
- US-A- 2 702 476
- US-A- 4 423 629

## Description

L'invention concerne un dispositif et un procédé de contrôle du niveau d'une poudre dans un récipient.

Plus particulièrement, l'invention permet de remplir jusqu'à un niveau déterminé un récipient tel qu'un conteneur d'un matériau en poudre. Un tel problème technique se rencontre par exemple dans la fabrication de pièces par métallurgie des poudres comportant une phase de compression de cette poudre dans une enceinte isostatique, à froid ou à chaud. La poudre métallique est placée dans une gaine étanche généralement opaque, en particulier dans le cas de la compression isostatique à chaud qui nécessite une gaine métallique. Cette gaine comporte à sa partie supérieure un conduit de faible diamètre qui est rempli jusqu'au niveau souhaité. Puis le conduit est obturé par écrasement et soudage de manière à assurer une fermeture étanche de la gaine. Pour une telle opération, il est nécessaire de connaître avec précision le niveau de la poudre dans le conduit de remplissage afin que l'obturation puisse être pratiquée au plus près et au-dessus de ce niveau de manière à éviter la présence de volumes morts après obturation.

On connaît, selon l'art antérieur, divers dispositifs pour détecter un niveau, notamment le niveau d'un matériau en poudre, que cette poudre soit métallique ou non. Cependant, chacun d'eux présente des inconvénients qui le rendent inadapté à résoudre le problème exposé ci-dessus.

Les palpeurs mécaniques sont peu sensibles et peu précis. Les dispositifs de détection utilisant un rayonnement, par exemple un rayonnement X, gamma ou un rayonnement de neutrons, nécessitent une installation lourde et complexe comportant un générateur de rayonnement, un détecteur de ce rayonnement, des moyens de visualisation sur un écran cathodique du signal détecté, etc... Les dispositifs de détection par contact électrique ne sont pas applicables pour des poudres non conductrices et sont sujets à des déficiences de fonctionnement dues à de faux contacts ou des courts-circuits. En outre, on sait que les poudres sont fréquemment tassées en faisant vibrer la gaine ou le récipient dans lequel elles se trouvent. Ces vibrations perturbent les mesures de la plupart de ces dispositifs connus et réduisent leur sensibilité.

On connaît par ailleurs (GB-A-1 487 673) un dispositif de mesure du niveau d'un liquide, notamment d'un métal fondu, constitué d'un tube ouvert à son extrémité inférieure et comportant un trou dans sa paroi périphérique. Une première jonction soudée d'un thermocouple différentiel est située à l'extrémité inférieure ouverte du tube et une deuxième jonction soudée de ce thermocouple est logée dans le trou pratiqué dans la paroi périphérique. Un courant gazeux, par exemple de l'azote, circule de haut en bas à l'intérieur du tube.

Lorsque l'extrémité inférieure ouverte du dispositif se rapproche du niveau du métal fondu, la circulation de l'azote est restreinte par la proximité du niveau du métal fondu, si bien que le gaz s'échappe essentiellement par le trou pratiqué dans la paroi périphérique, de telle sorte que les deux soudures ne sont plus refroidies de manière identique par la circulation du gaz. La jonction qui se trouve dans cet orifice périphérique est alors mieux refroidie. Une différence de température apparaît entre les deux soudures. La force électromotrice engendrée par cette différence de température est mesurée au moyen d'un microvoltmètre, ce qui permet de détecter la proximité du niveau du métal fondu.

Toutefois, ce dispositif ne peut s'appliquer à la mesure du niveau d'une poudre étant donné que la circulation du courant gazeux soufflerait la poudre, ce qui fausserait totalement la mesure de son niveau. En outre, ce procédé ne s'applique pas à une mesure faite dans le vide, comme il est nécessaire d'en réaliser, à titre d'exemple non limitatif, lorsque l'on souhaite mesurer le niveau d'une poudre sortant d'une installation de dégazage. En effet, le dégazage s'effectue sous un vide poussé. Il va de soi qu'il est impossible d'introduire un gaz dans ce vide.

La mesure du niveau de la poudre doit pouvoir être effectuée pendant que la poudre continue à être déversée autour du thermocouple. La mesure doit être effectuée avec une bonne précision et la sonde de mesure doit être de petites dimensions.

Ces objectifs sont atteints par un dispositif de contrôle conforme à l'invention qui comporte : un thermocouple constitué de trois fils en série réunis entre eux par deux soudures, à savoir une soudure chaude supérieure et une soudure chaude d'extrémité, espacées l'une de l'autre et des moyens de mesure des variations de la tension délivrée par le thermocouple en fonction du temps, en cas de différence de température entre la soudure chaude supérieure et la soudure chaude d'extrémité. En outre, une gaine constituée d'un matériau faiblement conducteur de la chaleur entoure le thermocouple sur une partie au moins de sa hauteur comprenant la soudure chaude supérieure, mais excluant la soudure chaude d'extrémité.

La gaine en s'échauffant d'une part au contact de la poudre, d'autre part en absorbant des calries provenant des fils du thermocouple entre les deux soudures, ralentit la mise en équilibre thermique de ces soudures.

De préférence, la gaine entoure complètement la soudure chaude supérieure ainsi que la plus grande partie de la longueur du thermocouple située entre la soudure chaude supérieure et la soudure chaude d'extrémité, de manière à laisser exposer directement à l'ambiance extérieure seulement la soudure chaude d'extrémité et un tronçon d'extrémité du thermocouple. De plus, ladite gaine est en contact thermique avec les fils du thermocouple et avec la soudure chaude supérieure ; le diamètre des fils du thermocouple étant faible relativement au diamètre extérieur de la gaine, de telle sorte que la conduction de chaleur de l'ambiance extérieure vers la soudure chaude supérieure s'effectue essentiellement par l'intermédiaire de la gaine, afin que la soudure chaude supérieure perçoive des variations de températures lentes sans percevoir des variations rapides de température.

Grâce à ces caractéristiques, l'invention permet d'atteindre les buts énumérés ci-dessus.

Pour que la mesure puisse être effectuée avec une bonne précision, il est nécessaire que les deux soudures soient relativement rapprochées l'une de l'autre. En effet, lorsqu'elles sont éloignées, les caractéristiques d'écoulement de la poudre, comme sa température et sa dispersion, ne sont pas les mêmes au niveau de la soudure chaude supérieure et de la soudure chaude d'extrémité. L'expérience a montré par exemple qu'une distance de 80 mm entre ces deux soudures ne permettait pas d'òbtenir une précision de mesure suffisante.

En outre, la présence d'une gaine présentant une inertie thermique et qui entoure la soudure chaude supérieure et une partie de la longueur du thermocouple assure une conduction thermique entre le milieu extérieur à la sonde dans lequel s'écoule la poudre et la soudure chaude supérieure. Ainsi, les variations de température de la poudre ainsi que du milieu extérieur parviennent à cette soudure supérieure avec un temps de retard. Cette soudure perçoit tes variations de température lentes, mais non pas les variations de température rapides. Il est à noter que la conduction par l'intermédiaire des fils du thermocouple est négligeable étant donné que ceux-ci présentent un diamètre très faible, de l'ordre de un dixième de millimètre. La conduction de la chaleur s'effectue donc essentiellement par l'intermédiaire de la gaine entourant le thermocouple.

La matière de la gaine et ses dimensions (longueur, diamètre) doivent donc être choisies de manière appropriée afin d'obtenir une inertie thermique convenable pour atteindre le but envisagé. La gaine sera par exemple réalisée en acier inoxydable.

La gaine joue donc le rôle d'un intégrateur de calories. Elle collecte la chaleur de la poudre lorsque celle-ci s'écoute tout en empêchant qu'un grain de poudre qui frapperait la soudure chaude supérieure ne provoque une perturbation de la mesure. Par ailleurs, cette gaine joue le rôle de radiateur en permettant de retourner à l'équilibre thermique plus rapidement. Dans certains cas, elle joue également le rôle d'amortisseur thermique. En jouant sur la masse de cette gaine, c'est-à-dire sur le produit de sa longueur par son épaisseur et sur la chaleur spécifique du matériau dans lequel elle est réalisée, on peut obtenir une inertie thermique convenable pour les buts énumérés ci-dessus.

L'invention concerne un procédé de mesure du niveau d'un matériau en poudre dans un récipient. Ce procédé est caractérisé par les étapes suivantes :
- on dispose un thermocouple différentiel ayant une soudure supérieure chaude protégée par une gaine et une soudure chaude inférieure non protégée dans l'ouverture dudit récipient, ledit thermocouple étant partiellement isolé thermiquement du matériau en poudre par la gaine qui s'étend sur au moins une partie de sa hauteur,
- on introduit de manière continue ladite poudre dans l'ouverture du récipient autour du thermocouple tout en surveillant la tension de sortie aux bornes de ce thermocouple,
- on arrête l'introduction continue de poudre après avoir détecté successivement un premier pic de tension puis un second pic de tension correspondant à un premier et un second pics de différence de température entre la soudure supérieure et la soudure inférieure du thermocouple,
- on fait vibrer le récipient de manière à tasser la poudre,
- on introduit une quantité supplémentaire de poudre dans le récipient jusqu'à détecter un troisième pic de tension aux bornes du thermocouple,
- on fait vibrer à nouveau le récipient de manière à tasser la poudre,
- on reprend les étapes de vibrations du récipient et d'introduction d'une quantité supplémentaire de poudre plusieurs fois jusqu'à ce que l'on puisse déceler un décrochement dans la courbe représentant la tension aux bornes du thermocouple en fonction du temps, ce décrochement se produisant au moment où le niveau de la poudre n'est plus en contact avec la soudure que par intermittence du fait des vibrations.

D'autres caractéristiques et avantages de l'invention apparaîtront encore à la lecture de la description qui suit d'un exemple de réalisation donné à titre illustratif en référence aux figures annexées, sur lesquelles :
- la figure 1 représente une vue en coupe longitudinale d'un dispositif de mesure du niveau conforme à l'invention,
- la figure 2 représente deux schémas qui illustrent le procédé de mesure du niveau d'une poudre conforme à l'invention,
- la figure 3 est un enregistrement d'une courbe qui représente la différence de température entre les soudures chaudes en fonction du temps.

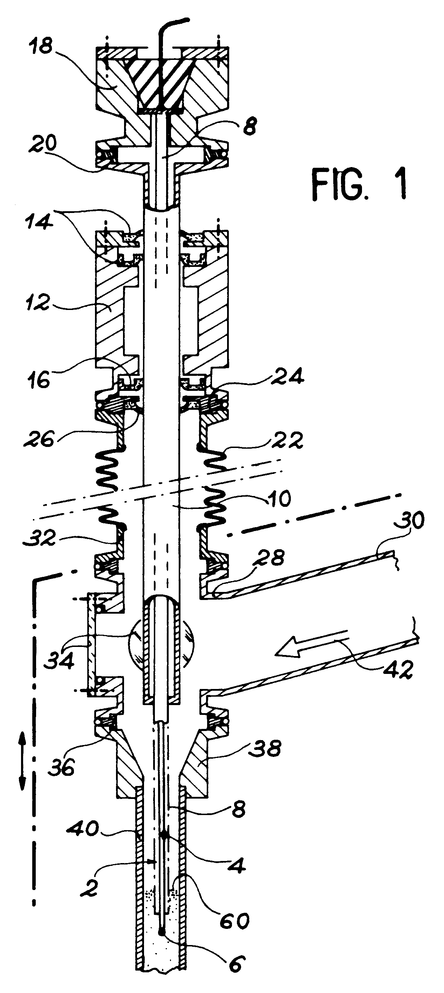

Le dispositif de mesure représenté sur la figure 1 comporte un thermocouple différentiel 2 disposé verticalement, par exemple un thermocouple constitué d'un fil de chromel et d'un fil d'alumel reliés par des soudures, respectivement une soudure chaude intermédiaire 4 et une soudure chaude extrême 6 espacées l'une de l'autre selon une direction verticale. Le couple de métaux chromel-alumel permet en effet une grande sensibilité du thermocouple, de l'ordre de 40 microvolts par degré centigrade dans un domaine de températures compris entre 20°C et 150°C.

Comme on peut le voir sur la figure 1, la soudure chaude 6 est située à l'extrémité du thermocouple, et en constitue le point le plus bas. Le thermocouple est entouré d'une gaine 8 qui a pour fonction de ralentir la mise à l'équilibre thermique entre les deux soudures par son échauffement propre. Cet échauffement se produit par deux voies : d'abord par absorption de calories provenant de l'écoulement du filet de poudre s'écoulant au contact de la gaine et d'autre part par une absorption des calories transmises par le fil du thermocouple entre les soudures d'extrémité 4 et inférieure 6. Cette gaine s'étend sur une partie au moins de la longueur du thermocouple. La soudure chaude 6 en revanche ne doit pas être gainée de manière à entrer en contact direct avec le matériau en poudre sans barrière thermique pendant le remplissage. A distance fixée entre les deux soudures, l'effet d'inertie thermique de la gaine peut être plus ou moins accentué en jouant sur sa longueur, son épaisseur et sa chaleur massique. La différence de température entre la poudre et le thermocouple doit être d'au moins 0,5°C. La gaine 8 est elle-même entourée sur une partie de sa hauteur par un tube 10 de protection auquel elle est fixée. Le tube 10 coulisse dans un passage de translation 12 constitué par un manchon cylindrique présentant une ouverture axiale cylindrique pour le tube 10. Des joints d'étanchéité 14 et 16 assurent une étanchéité entre le tube 10 et l'entrée et la sortie du passage de translation 12. A son extrémité supérieure, la gaine 10 est raccordée à un passage électrique 18 par l'intermédiaire d'un raccord à anneau de centrage 20. Le passage électrique étanche 18 assure la liaison électrique des fils du thermocouple avec un amplificateur qui a pour fonction d'amplifier les courants extrêmement faibles délivrés par le thermocouple afin que ces courants puissent ensuite être mesurés et/ou enregistrés. La mesure de la tension délivrée par le thermocouple différentiel peut être effectuée à l'aide de tout moyen approprié par exemple un voltmètre. Cependant, on utilisera de préférence un moyen permettant d'enregistrer les variations de la tension aux bornes du thermocouple, par exemple un traceur de courbes. Tout enregistreur amplificateur, par exemple celui qui est fabriqué et commercialisé par la Société SEFRAM convient pour cet usage.

La partie inférieure du passage de translation 12 est reliée à un soufflet 22 par l'intermédiaire d'un raccord à anneau de centrage 24 muni d'un joint 26. A son autre extrémité, le soufflet est raccordé à une chambre 28 d'arrivée du matériau en poudre dont on veut mesurer le niveau. Cette chambre comportant un ou plusieurs hublots 34 par lesquels on peut observer l'écoulement de la poudre est raccordée à une tuyauterie 30 par laquelle la poudre est acheminée. Une bride à anneau de centrage 32 assure la liaison entre la pièce 28 et le soufflet 22. Ce dernier a pour fonction d'isoler la pièce 28 et les pièces qui en sont solidaires de la partie supérieure de l'appareil de mesure constituée par le passage électrique, le passage de translation et le tube 10 supportant le thermocouple proprement dit, notamment afin que les vibrations qui permettent le tassage de la poudre, comme on l'expliquera ultérieurement, ne soient pas transmises au thermocouple.

La chambre 28 est elle-même raccordée par l'intermédiaire d'une bride à anneau de centrage 36 à une pièce 38 solidaire du tube 40. On remarque que l'extrémité inférieure du thermocouple, et en particulier la soudure chaude 6 du thermocouple, pénètre dans le tube 40 du conteneur. Comme on le remarque, le thermocouple est situé sensiblement au centre du tube 40 de manière à laisser un passage tout autour pour la poudre. Il est en effet important que cette poudre puisse s'écouler au contact de la gaine 8 qui entoure le thermocouple.

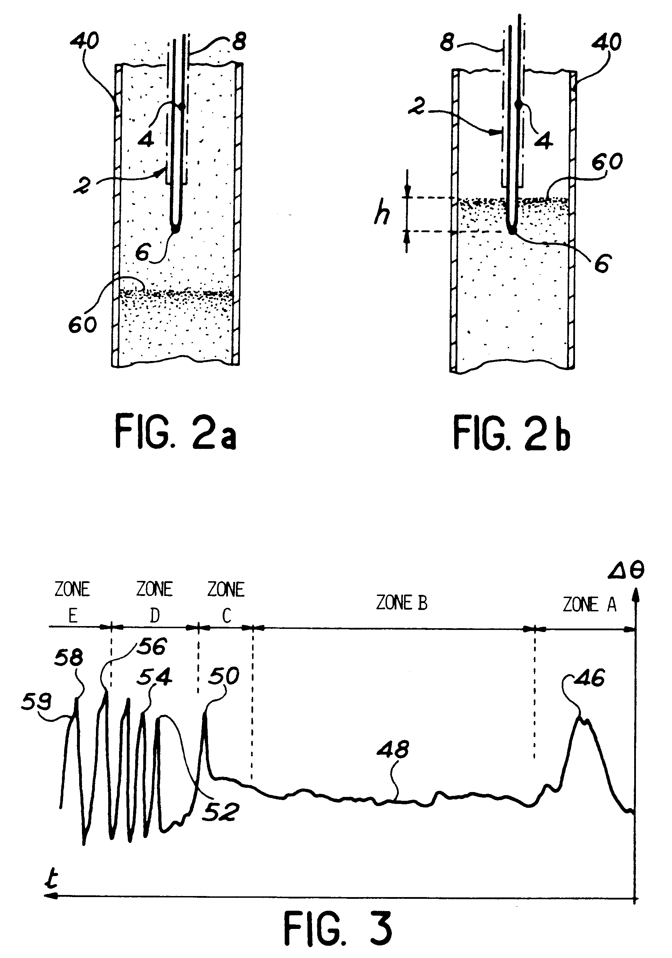

Le fonctionnement de ce dispositif est le suivant :
La poudre est amenée par la canalisation 30, comme schématisé par la flèche 42. Au début du remplissage, lorsque la poudre commence à s'écouler, elle provoque une augmentation de la température de la soudure chaude 6, étant donné que, comme on l'a mentionné plus haut, il est nécessaire qu'il existe une différence de température entre le matériau en poudre et le thermocouple. Au contraire, la soudure chaude 4, qui est protégée par la gaine 8, ne subit qu'une faible et lente élévation de température (figure 2a). On note par conséquent l'apparition d'une différence de potentiel entre la soudure 4 et la soudure 6 correspondant à la différence de température entre ces deux soudures. Ce pic de température 46 a été enregistré dans la zone A de la figure 3 qui représente, sur un traceur de courbe, de l'enregistrement la différence de température entre les soudures chaudes en fonction du temps.

Pendant la période de remplissage du conteneur, un équilibre thermique entre les deux soudures s'établit, par conduction thermique dans le fil de chromel et d'alumel du thermocouple et dans la gaine 8. Lorsque les deux soudures sont à la même température, la différence de potentiel aux bornes du thermocouple s'annule. Cette étape correspond à la zone B de la phase de remplissage (référence 48). De légères variations de débit, ainsi que la grande sensibilité de l'enregistreur, provoquent l'apparition de quelques fluctuations. En effet, la température de la soudure 6 est directement liée à la quantité moyenne de grains de poudre frappant par unité de temps et de surface l'extrémité du thermocouple, alors que la température de la soudure 4 varie beaucoup plus lentement en raison de l'effet d'inertie thermique de la gaine 8 qui la protège. Ce détecteur permet donc de plus le suivi du débit en période de remplissage (zone B). Lorsque le niveau de la poudre se rapproche de la soudure chaude 6, l'atteint, puis la dépasse légèrement de sorte que cette soudure pénètre d'une hauteur h à l'intérieur du matériau en poudre (voir figure 2b), on détecte une augmentation rapide et brutale de la température de la soudure chaude 6 sans que la température de la soudure 4 évolue en raison de la grande inertie thermique que lui confère son gainage 8. Cette augmentation de température se traduit par un pic thermique 50. On stoppe alors l'écoulement de la poudre. Le retour à l'équilibre thermique des deux soudures du thermocouple s'effectue progressivement par conduction thermique par l'intermédiaire des fils du thermocouple et de la gaine. La plus grande partie du remplissage, correspondant aux zones A, B et C est ainsi terminée. A partir de cet instant, on commence l'optimisation du remplissage. Dans ce but, on fait vibrer le conteneur au moyen d'un dispositif de vibration de type connu de manière à tasser la poudre, de sorte que le niveau de cette dernière redescend en-dessous du niveau de la soudure chaude 6. Ce niveau 60 se retrouve ainsi dans la position schématisée sur la figure 2a. On verse alors une quantité supplémentaire de poudre jusqu'à détecter l'apparition d'un troisième pic de température 52 (zone D). On arrête alors le remplissage et on tasse à nouveau la poudre en faisant vibrer le conteneur. Le niveau de la poudre redescend alors en-dessous de la soudure chaude 6. On verse une nouvelle quantité de poudre par l'intermédiaire de la canalisation 30 jusqu'à détecter le pic 54. La suite de ces opérations est reprise plusieurs fois. L'ajout de faibles quantités de poudre par intermittence tend vers l'optimisation du remplissage. La vitesse de descente du niveau de la poudre par suite du tassage devient de plus en plus faible au fur et à mesure que la poudre située dans le conteneur est plus tassée. Ceci se traduit par un espacement et un élargissement des pics successifs 56, 58 de température, comme on peut le constater dans la zone E. Le remplissage est terminé lorsqu'on peut déterminer le décrochement 59. Ce décrochement apparaît parce que la poudre vibre mais se tasse plus lentement. Pendant la durée du palier consécutif au décrochement, elle revient en contact avec l'extrémité du thermocouple à chaque vibration et donc ralentit la mise en équilibre thermique des deux soudures par apport de chaleur à la soudure inférieure.

Lorsque le tassage de la poudre dans le récipient est satisfaisant, on relève le thermocouple en le faisant coulisser dans le passage de translation 12. Les deux soudures 4 et 6 retrouvent ainsi leur équilibre thermique.

D'autre part, si on veut détecter précisément le niveau de poudre d'un conteneur déjà rempli, il suffit qu'il existe une différence de température, même faible (0,5°C), entre la poudre et le thermocouple. On descend le thermocouple à la verticale. Dès qu'il y a contact avec la poudre, la température de la soudure 6 varie instantanément alors que la température de la soudure supérieure 4 n'évolue pratiquement pas du fait de l'inertie thermique conférée par la gaine 8. Cet écart de température se traduit par un pic très net. La position du niveau de poudre est détectée avec une précision de l'ordre de ± 3 mm.

### EXEMPLE DE REALISATION

On a réalisé un dispositif de mesure conforme à l'invention comportant une gaine en acier inoxydable de 1 mm d'épaisseur. La distance entre les deux soudures est de 40 mm et la gaine recouvre le thermocouple sur une distance de 30 mm entre ces deux soudures. En d'autres termes, la distance libre du thermocouple qui n'est pas recouverte par la gaine est de 10 mm.

## Revendications

1. Dispositif de contrôle du niveau d'une poudre dans un récipient, caractérisé en ce qu'il comprend un thermocouple constitué de trois fils en série réunis entre eux par deux soudures, à savoir une soudure chaude supérieure (4) et une soudure chaude d'extrémité (6), espacées l'une de l'autre et des moyens de mesure des variations de la tension délivrée par le thermocouple en fonction du temps, en cas de différence de température entre la soudure chaude supérieure (4) et la soudure chaude d'extrémité (6), et en ce qu'une gaine (8) constituée d'un matériau faiblement conducteur de la chaleur entoure le thermocouple sur une partie au moins de sa hauteur comprenant la soudure chaude supérieure (4), mais excluant la soudure chaude d'extrémité (6).

2. Dispositif de contrôle du niveau d'une poudre selon la revendication 1, caractérisé en ce que la gaine (8) entoure complètement la soudure chaude supérieure (4) ainsi que la plus grande partie de la longueur du thermocouple située entre la soudure chaude supérieure (4) et la soudure chaude d'extrémité (6), de manière à laisser exposer directement à l'ambiance extérieure seulement la soudure chaude d'extrémité (6) et un tronçon d'extrémité du thermocouple ; ladite gaine (8) étant en contact thermique avec les fils du thermocouple et avec la soudure chaude supérieure (4) ; le diamètre des fils du thermocouple étant faible relativement au diamètre extérieur de la gaine (8), de telle sorte que la conduction de chaleur de l'ambiance extérieure vers la soudure chaude supérieure (4) s'effectue essentiellement par l'intermédiaire de la gaine (8), afin que la soudure chaude supérieure (4) perçoive des variations de température lentes sans percevoir des variations rapides de température.

3. Dispositif selon la revendication 1 ou 2, caractérisé en ce que le thermocouple est solidaire d'un tube (10) coulissant dans un passage de translation, des joints d'étanchéité (14, 16) étant prévus entre le tube (10) et le passage de translation, une canalisation d'arrivée de poudre (30) débouchant dans une chambre (28) entourant le tube, ladite chambre étant raccordée au récipient à remplir, un soufflet d'étanchéité anti-vibration étant monté entre la chambre (28) et le passage de transtation (12).

4. Dispositif selon la revendication 3, caractérisé en ce que la chambre comporte un hublot de visualisation (34).

5. Dispositif selon l'une quelconque des revendications 1 à 3, caractérisé en ce que la chambre (28) est raccordée audit récipient par un raccord à bride de centrage (36).

6. Dispositif selon l'une quelconque des revendications 1 à 5, caractérisé en ce que les moyens pour détecter la tension délivrée par le thermocouple sont constitués par un traceur de courbe.

7. Dispositif selon l'une quelconque des revendications 1 à 6, caractérisé en ce que la gaine (8) est en acier inoxydable.

8. Procédé de contrôle du niveau d'une poudre dans un récipient (40), caractérisé en ce que l'on dispose un thermocouple différentiel ayant une soudure supérieure chaude (4) protégée par une gaine (8) et une soudure chaude d'extrémité non protégée (6) dans l'ouverture dudit récipient, ledit thermocouple étant partiellement isolé thermiquement du matériau en poudre par la gaine (8) qui s'étend sur au moins une partie de sa hauteur ; on introduit de manière continue ladite poudre dans l'ouverture du récipient autour du thermocouple (2) tout en surveillant la tension de sortie aux bornes de ce thermocouple ; on arrête l'introduction continue de poudre après avoir détecté successivement un premier pic de tension (46) puis un second pic de tension (50) correspondant à un premier et un second pics de différence de température entre la soudure supérieure (4) et la soudure d'extrémité (6) du thermocouple ; on fait vibrer le récipient (40) de manière à tasser la poudre ; on introduit une quantité supplémentaire de poudre dans le récipient (40) jusqu'à détecter un troisième pic de tension (52) aux bornes du thermocouple ; on fait vibrer à nouveau le récipient de manière à tasser la poudre ; on reprend les étapes de vibrations du récipient et d'introduction d'une quantité supplémentaire de poudre plusieurs fois jusqu'à ce que l'on puisse déceler un décrochement (59) dans la courbe représentant la tension aux bornes du thermocouple en fonction du temps, ce décrochement (59) se produisant au moment où le niveau de la poudre n'est plus en contact avec la soudure que par intermittence du fait des vibrations.

9. Procédé selon la revendication 8, caractérisé en ce que l'on enregistre la tension délivrée aux bornes du thermocouple sur un traceur de courbes.

10. Procédé selon l'une quelconque des revendications 8 ou 9, caractérisé en ce que le remplissage, le tassage et leur optimisation sont entièrement automatisés par l'analyse du signal enregistré qui est utilisé pour piloter l'arrivée de poudre et le tassage de cette dernière.

## Claims

1. Device for checking the level of a powder in a container, characterized in that it comprises a thermocouple constituted by three wires in series joined to one another by two junctions, namely an upper hot junction (4) and an end hot junction (6), which are spaced from one another and means for measuring variations of the voltage supplied by the thermocouple as a function of time, in the case of a temperature difference between the upper hot junction (4) and the end hot junction (6) and in that a sheath (8) made from a weakly hot conducting material surrounds the thermocouple over at least part of its height including the upper hot junction (4), but excluding the end hot junction (6).

2. Device for checking the level of a powder according to claim 1, characterized in that the sheath (8) completely surrounds the upper hot junction (4) and most of the length of the thermocouple located between the upper hot junction (4) and the end hot junction (6), so as to directly expose to the external environment only the end hot junction (6) and an end section of the thermocouple, said sheath (8) being in thermal contact with the wires of the thermocouple and with the upper hot junction (4), the diameter of the thermocouple wires being small compared with the external diameter of the sheath (8), so that the heat conduction from the external environment to the upper hot junction (4) essentially takes place via the sheath (8), so that the upper hot junction (4) discerns slow temperature variations, but without discerning rapid temperature variations.

3. Device according to claims 1 or 2, characterized in that the thermocouple is integral with a tube (10) sliding in a translation passage, gaskets (14, 16) being provided between the tube (10) and the translation passage, a powder supply duct (30) issuing into a chamber (28) surrounding the tube, said chamber being connected to the container to be filled, an anti-vibration sealing bellows being installed between the chamber (28) and the translation passage (12).

4. Device according to claim 3, characterized in that the chamber has an inspection window (34).

5. Device according to any one of the claims 1 to 3, characterized in that the chamber (28) is connected to said container by a centring flanged joint (36).

6. Device according to any one of the claims 1 to 5, characterized in that the means for detecting the voltage supplied by the thermocouple are constituted by a plotter.

7. Device according to any one of the claims 1 to 6, characterized in that the sheath (8) is made from stainless steel.

8. Process for checking the level of a powder in a container (40), characterized in that a differential thermocouple having an upper hot junction (4) protected by a sheath (8) and an unprotected end hot junction (6) is placed in the opening of said container, said thermocouple being partly thermally insulated from the powder material by the sheath extending over at least part of its height, continuous introduction takes place of said powder into the container opening around the thermocouple (2), whilst monitoring the output voltage at the terminals of said thermocouple, continuous powder introduction is stopped after successively detecting a first voltage peak (46) and then a second voltage peak (50) corresponding to a first and second temperature difference peaks between the upper junction (4) and the junction (6) of the thermocouple, the container (40) is made to vibrate so as to compress the powder, a supplementary powder quantity is introduced into the container (40) until a third voltage peak (52) is detected at the thermocouple terminals, the container is again vibrated so as to compress the powder, the stages of vibrating the container and introducing a supplementary powder quantity are repeated several times until it is possible to detect a break (59) in the curve representing the voltage at the thermocouple terminals as a function of time, said break (59) occurring at the instant when the powder level is only intermittently in contact with the junction as a result of the vibrations.

9. Process according to claim 8, characterized in that the voltage supplied at the thermocouple terminals is recorded on a plotter.

10. Process according to either of the claims 8 and 9, characterized in that the filling, compression and their optimization are entirely automated by the analysis of the recorded signal, which is used for controlling powder arrival and powder compression.

## Patentansprüche

1. Vorrichtung zur Kontrolle des Füllstandes eines Pulvers in einem Behälter, dadurch gekennzeichnet, daß sie ein Thermoelement aus drei Drähten in Reihe, die untereinander durch zwei Schweißungen verbunden sind, also einer warmen, oberen Schweißung (4) und einer warmen Endverschweißung (6), die voneinander getrennt sind, und Meßvorrichtungen für Änderungen der von dem Thermoelement als Funktion der Zeit im Falle einer Temperaturdifferenz zwischen der warmen, oberen Schweißung (4) und der warmen Endverschweißung (6) erzeugten Spannungen umfaßt, und daß eine Hülle (8) aus einem die Wärme schlecht leitendem Material das Thermoelement wenigstens auf einem Teil seiner Höhe einschließlich der warmen, oberen Schweißung (4) aber ausschließlich der warmen Endschweißung (6) umgibt.

2. Vorrichtung zur Kontrolle des Füllstandes eines Pulvers nach Anspruch 1, dadurch gekennzeichnet, daß die Hülle (8) vollständig die warme, obere Schweißung (4) ebenso wie den größten Teil der Länge des Thermoelements zwischen der warmen, oberen Schweißung (4) und der warmen Endschweißung (6) so umgibt, daß nur die warme Endschweißung (6) und ein Endstück des Thermoelements der Umgebung freigegeben werden; wobei die Hülle (8) sich in thermischem Kontakt mit den Drähten des Thermoelements und der warmen, oberen Schweißung (4) befindet; wobei der Durchmesser der Drähte des Thermoelements klein verglichen mit dem äußeren Durchmesser der Hülle (8) ist, so daß die Wärmeleitung zwischen der Umgebung und der warmen, oberen Schweißung (4) im wesentlichen über die Hülle (8) stattfindet, so daß die warme, obere Schweißung (4) langsame Temperaturänderungen wahrnimmt, ohne schnelle Temperaturänderungen wahrzunehmen.

3. Vorrichtung zur Kontrolle des Füllstandes eines Pulvers nach Anspruch 1 oder 2, dadurch gekennzeichnet, daß das Thermoelement mit einer Röhre (10) verbunden ist, die in einem Translationsdurchlaß gleitet, wobei Dichtungsverbindungen (14, 16) zwischen der Röhre (10) und dem Translationsdurchlaß vorgesehen sind, wobei ein Pulverzuführkanal (30) in eine die Röhre umgebende Kammer (28) mündet, wobei die Kammer mit dem zu füllenden Behälter verbunden ist, wobei ein Vibrationsschutz-Dichtungsbalg zwischen der Kammer (28) und dem Translationsdurchgang (12) montiert ist.

4. Vorrichtung zur Kontrolle des Füllstandes eines Pulvers nach Anspruch 3, dadurch gekennzeichnet, daß die Kammer ein Bullauge (34) zum Beobachten besitzt.

5. Vorrichtung zur Kontrolle des Füllstandes eines Pulvers nach einem der Ansprüche 1 bis 3, dadurch gekennzeichnet, daß die Kammer mit dem Behälter mittels eines Zentrierflansches (36) verbunden ist.

6. Vorrichtung zur Kontrolle des Füllstandes eines Pulvers nach einem der Ansprüche 1 bis 5, dadurch gekennzeichnet, daß die Vorrichtungen zum Feststellen der von dem Thermoelement erzeugten Spannung durch einen Kurvenschreiber gebildet werden.

7. Vorrichtung zur Kontrolle des Füllstandes eines Pulvers nach einem der Ansprüche 1 bis 6, dadurch gekennzeichnet, daß die Hülle (8) aus Edelstahl besteht.

8. Verfahren zur Kontrolle des Füllstandes eines Pulvers in einem Behälter (40), dadurch gekennzeichnet, daß man ein differentielles Thermoelement mit einer warmen, oberen Schweißung (4), die von einer Hülle (8) geschützt ist, und einer warmen, nicht geschützten Endschweißung (6) in der Öffnung des Behälters anordnet, wobei das Thermoelement teilweise von dem Pulvermaterial durch die Hülle (8) geschützt ist, die sich über wenigstens einen Teil seiner Höhe erstreckt; daß man kontinuierlich das Pulver in die Öffnung des Behälters um das Thermoelement (2) einfüllt, wobei man die Ausgangsspannung an den Klemmen des Thermoelements überwacht; daß man das kontinuierlich Einfüllen des Pulvers unterbricht, nachdem man der Reihe nach eine erste (46) und dann eine zweite (50) Spannungsspitze beobachtet hat, die entsprechend einer ersten und einer zweiten Spitze der Temperaturdifferenz zwischen der oberen Schweißung (4) und der Endschweißung (6) des Thermoelements entsprechen; daß man den Behälter (40) derart schüttelt, daß das Pulver gepreßt wird; daß man eine zusätzliche Pulvermenge in den Behälter (40) einführt, bis man eine dritte Spannungsspitze (32) an den Klemmen des Thermoelements feststellt; daß man erneut den Behälter derart schüttelt, daß das Pulver gepreßt wird; daß man die Schritte des Schüttelns des Behälters und des Einführens einer weiteren Pulvermenge mehrmals wiederholt, bis man eine Verschiebung (59) in der Kurve feststellen kann, die die Spannung an den Klemmen des Thermoelements als Funktion der Temperatur angibt, wobei diese Verschiebung (59) in dem Moment entsteht, in dem die Pulverhöhe mit der Schweißung nur noch stoßweise durch die Vibrationen in Kontakt ist.

9. Verfahren nach Anspruch 8, dadurch gekennzeichnet, daß man die an den Klemmen des Thermoelements erzeugte Spannung mittels eines Kurvenschreibers aufnimmt.

10. Verfahren nach einem der Ansprüche 8 oder 9, dadurch gekennzeichnet, daß das Einfüllen, das Pressen und ihre Optimierung vollständig durch die Analyse des aufgezeichneten Signals, das zum Steuern der Ankunft des Pulvers und zum Pressen des letzteren verwendet wird, automatisiert sind.
